Europäisches Patentamt

European Patent Office

Office européen des brevets

(19)

(11) Veröffentlichungsnummer: **0 256 209 B1**

## (12) EUROPÄISCHE PATENTSCHRIFT

(45) Veröffentlichungstag der Patentschrift: **26.02.92**

(51) Int. Cl.5: **B01D 53/36**, B01J 23/22

(21) Anmeldenummer: **87105323.7**

(22) Anmeldetag: **10.04.87**

Die Akte enthält technische Angaben, die nach
dem Eingang der Anmeldung eingereicht wurden
und die nicht in dieser Patentschrift enthalten sind.

(54) **Katalysator zur reduktiven Umwandlung von Stickoxiden in Abgasen.**

(30) Priorität: **17.04.86 CH 1556/86**

(43) Veröffentlichungstag der Anmeldung:
**24.02.88 Patentblatt 88/08**

(45) Bekanntmachung des Hinweises auf die
Patenterteilung:
**26.02.92 Patentblatt 92/09**

(84) Benannte Vertragsstaaten:
**AT CH DE GB LI NL SE**

(56) Entgegenhaltungen:
**DE-B- 2 458 888**
**FR-A- 2 243 152**
**US-A- 4 176 091**

(73) Patentinhaber: **LONZA AG**

**Gampel/Wallis(CH)**

(72) Erfinder: **Baiker, Alfons, Dr.**
**Rietgrabenstrasse 63**
**Opfikon Kanton Zürich(CH)**
Erfinder: **Dollenmeier, Peter**
**Hofstrasse 2**
**Wallisellen (Kanton Zürich)(CH)**
Erfinder: **Glinski, Marek**
**Stalingradzka16/113**
**Warschau(PL)**

(74) Vertreter: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40(DE)**

EP 0 256 209 B1

**Beschreibung**

Es sind Verfahren bekannt geworden, Stickoxide in Abgasen mittels eines Katalysators in Gegenwart von Ammoniak reduktiv umzuwandeln. Die Katalysatoren sollen eine innige Mischung der Komponenten Titan in Form von Oxiden, einem Metalloxid, beispielsweise Vanadiumoxid, gegebenenfalls unter Zusatz von Zinnoxid und beispielsweise Siliziumoxid, darstellen (DE-B-24 58 888).

Derartige Katalysatoren wurden entwickelt, um stickoxidhaltige Abgase, die auch Schwefeloxide enthalten können, unter Beibehaltung einer hohen Aktivität während langer Zeitdauer behandeln zu können.

Als nachteilig bekannt ist auch bei Katalysatoren, die auf einem inerten Träger aufgetragen sind, eine starke Oxidationsaktivität gegenüber Ammoniak, die bei erhöhten Reaktionstemperaturen zur Bildung von Stickoxiden aus Ammoniak führt. Damit nimmt die Entfernungswirksamkeit für Stickoxide zwangsläufig ab.

Aufgabe vorliegender Erfindung war es, Katalysatoren zur Verfügung zu stellen, die einerseits in Form von Trägerkatalysatoren vorliegen, wobei die aktiven Bestandteile sich nur oberflächlich auf dem Träger befinden, andererseits bezüglich der Reaktionstemperaturen und der Stabilität gegenüber Schwefeloxid bekannten Katalysatoren ebenbürtig sind.

Erfindungsgemäss werden derartige Katalysatoren nach einem Verfahren hergestellt, dass ein Träger, enthaltend $TiO_2$, $SiO_2$, $ZrO$, $Cr_2O_3$ und/oder $SnO_2$, wenigstens einmal mit einem Vanadiumalkoxid, gelöst in einem apolaren, wasserfreien Lösungsmittel, vorzugsweise n-Hexan oder Petrolether, imprägniert wird und der imprägnierte Träger bei Temperaturen von 300 bis 600 °C im trockenen Gasstrom mit 15 bis 25 Vol.% Sauerstoff, vorzugsweise im Luftstrom, kalziniert,um eine oberflächliche Abscheidung der aktiven Teile in Form der Vanadiumoxide auf den Träger und eine anschliessende Aktivierung zu erreichen.

Als Träger kann handelsübliches Material in einer Trägerflüssigkeit, gegebenenfalls unter Zugabe eines flüchtigen Binders, suspendiert werden. Nach Entfernen der Trägerflüssigkeit durch Verdunsten oder Verdampfen kann der Rückstand gebrochen oder gemahlen und die gewünschte Fraktion ausgesiebt werden. Weiters ist es mit an sich bekannten Granulierverfahren, wie die Verarbeitung mittels Granulierteller, möglich, geeignete körnige Fraktionen herzustellen. Körnige Fraktionen in kugeliger Form, beispielsweise hergestellt nach bekannten Sprühtrocknungsverfahren, können ebenfalls Anwendung finden. Zweckmässig wird der vorbereitete Träger durch Wärmebehandlung bis 600 °C kalziniert.

Eine weitere zweckmässige Form von Trägern wird nach dem Sol-Gel-Verfahren hergestellt.

Zu den bevorzugten Gelen gehören die $SiO_2/TiO_2$-Gele. Zu deren Herstellung wird ein Alkylsilikat, z.B. Tetraethylsilikat, in Wasser hydrolisiert und unter vermindertem Druck das gebildete Ethanol entfernt. Auf diese Weise erhält man ein farbloses, voll transparentes Silika-Sol.

Das Titandioxid-Sol wird ebenfalls durch Lösen eines Alkyltitanates mit der allgemeinen Formel Ti(O-$C_xH_{2x+1})_Y$, wobei X eine Zahl von 2 bis 5 und Y eine Zahl von 4 bedeutet, z.B. Tetraisopropyltitanat, in Wasser oder im entsprechenden Alkohol, durch Eintropfenlassen der Lösung in eine ca. 1 N Salzsäurelösung und durch anschliessendes Verdampfen unter reduziertem Druck des entstandenen Alkohols und der HCl, erhalten. Diese Sol-Lösungen werden mit Wasser verdünnt und im Verhältnis 20 bis 60 Mol% $SiO_2$ und 80 bis 40 Mol% $TiO_2$ zusammengerührt.

Das gemischte Sol wird getrocknet, wobei das gemischte Gel entsteht, und durch Zerkleinern und Fraktionieren in die gewünschte Kornfraktion gebracht.

Die beschriebenen Träger können als solche verwendet werden; es ist aber auch möglich, die Träger ihrerseits auf ein Stützgerüst aufzubringen. Derartige Stützgerüste sind beispielsweise extrudierte keramische Körper, sogenannte "Honeycomb bodies" oder Wabenkörper, keramische Schaummaterialien, hergestellt durch Imprägnieren mit keramischem Schlicker, Trocknen und Brennen von organischen, offenzelligen, flexiblen Schäumen, wobei beim Brennen das organische Material verschwindet und ein Abbild davon in keramischer Form zurückbleibt, oder beispielsweise Sinterkörper aus keramischem Material in stückig gebrochener oder kugeliger Form.

Die aktiven Teile des erfindungsgemässen Katalysators sind Vanadiumoxide. Es kann von feingemahlenem $V_2O_5$ ausgegangen werden, das in einem Alkohol der allgemeinen Formel $C_xH_{2x+1}OH$, wobei x 1 bis 8 bedeutet, beispielsweise Isobutanol, zum Vanadiumalkoxid umgesetzt und aus dem Reaktionsgemisch abdestilliert wird.

Der Träger wird seinerseits mit dem Vanadiumalkoxid imprägniert. Dazu kann das Vanadiumalkoxid in einem apolaren, wasserfreien Lösungsmittel gelöst und der Träger, gegebenenfalls mit demselben Lösungsmittel durchnässt, besprüht werden.

In einer weiteren Ausführungsform kann der Träger auch in eine Vanadiumalkoxidlösung eingetaucht werden, wobei genannte Lösungsmittel zur Anwendung gelangen. Der Imprägnierprozess muss in inerter Atmosphäre durchgeführt, beispielsweise im trockenen $N_2$-Strom.

Schliesslich wird der imprägnierte Träger bei Temperaturen von 300 bis 600 °C während 3 bis 6 Stunden in einem Gasstrom, enthaltend 15 bis 25 Vol.% Sauerstoff, zweckmässig enthaltend 21 Vol.% Sauerstoff, vorzugsweise im trockenen Luftstrom, kalziniert.

Der Imprägnier- und Kalzinierprozess muss in absolut wasserfreier Umgebung ausgeführt werden. Sowohl das Lösungsmittel, die Schutzgasatmosphäre als auch der Gasstrom für die Kalzinierung sollen völlig wasserfrei sein.

Die Imprägnier- und Kalzinierschritte werden wenigstens einmal, zweckmässig ein- bis sechsmal und vorzugsweise drei- bis fünfmal hintereinander, durchgeführt.

Die erfindungsgemässen Katalysatoren sind geeignet, aus Gasen, beispielsweise Verbrennungsgasen und Abgasen, die Sauerstoff, Stickstoff, Wasserdampf, Kohlenmonoxid, Kohlendioxid, Stickoxide und gegebenenfalls Schwefeldioxid enthalten, die Stickoxide in unschädliche Gase, wie z.B. Stickstoff, umzuwandeln.

Zu den umzuwandelnden Stickoxiden zählen NO, $N_2O_3$, $NO_2$, $N_2O_4$ und $N_2O_5$.

Die Anwesenheit von Sauerstoff begünstigt die Reduktion von Stickoxid (NO) bei Anwesenheit von Ammoniak als reduzierndes Mittel. Für höherwertige Stickoxide als NO ist die Anwesenheit von Sauerstoff nicht unbedingt erforderlich.

Die Menge des für die Behandlung des Gasgemisches notwendigen Ammoniakes richtet sich nach dem Gehalt an Stickoxiden. Ueblicherweise werden pro Mol Stickoxid 1 bis 3 Mol, vorzugsweise 1 Mol Ammoniak, angewendet.

Der Katalysator kann als Festbettkatalysator ausgelegt werden und ermöglicht eine Raumgeschwindigkeit von 300 bis 100'000 $h^{-1}$, vorzugsweise 7'000 bis 50'000 $h^{-1}$, wobei vom Normalzustand (NTP) ausgegangen wird.

Die Reaktionstemperaturen liegen in der Regel bei 150 bis 350 °C, in Gegenwart von $SO_2$ vorzugsweise bei 300 bis 350 °C, sonst bei 150 bis 250 °C.

Die Druckverhältnisse sind an sich nicht kritisch, ein Bereich von Normaldruck bis 10 bar kann als zweckmässiger Arbeitsbereich gelten.

Beispiel 1

Träger

a) Herstellung eines $TiO_2$-Trägers

20 g $TiO_2$ (P25 Degussa) wurden mit 35 ml Wasser verrührt. Die Paste wurde in einem Becherglas 24 Std. bei 60 °C, anschliessend bei 120 °C weitere 72 Std. getrocknet. Der Rückstand wurde zerkleinert und die Siebfraktion von 0,5 bis 1,0 mm wurde 1 Std. bei 600 °C in Luft, darauf 5 Std. in trockenem Stickstoff, ebenfalls bei 600 °C, kalziniert.

b) Herstellung eines gemischten $SiO_2/TiO_2$-Gels

Silika-Sol:

208 g $Si(OC_2H_5)_4$ (Fluka, purum 98%) wurden unter Normaldruck bei 168 °C destilliert. Dazu wurden 500 ml Wasser gegeben und während 48 Std. bei 50 °C intensiv gerührt. Ethanol wurde am Rotationsverdampfer unter reduziertem Druck bei 50 °C entfernt. Auf diese Weise erhielt man ein farbloses, voll transparentes Silika-Sol.

Titandioxid-Sol:

239 g destilliertes $Ti(O-i-C_3H_7)_4$ (Fluka, pract) (bp. 109-110 °C/12 Torr) wurden in 200 ml i-Propanol (Fluka puriss.) aufgelöst und die resultierende Lösung während 4 Std. einer 1N Salzsäurelösung (1,5 l) zugetropft. Isopropanol und teilweise auch HCl wurden im Rotationsverdampfer bei 50 °C unter reduziertem Druck entfernt. Man erhielt ein farbloses, transparentes Titandioxid-Sol.

Gemischtes Gel:

Die Sol-Lösungen wurden in einem Masskolben mit Wasser auf 1 l verdünnt. Aequivalente Mengen dieser Lösungen wurden während 30 Min. zusammen gerührt. Das entstandene gemischte Sol wurde 24 Std. bei 60 °C, dann 72 Std. bei 120 °C getrocknet. Das gemischte Gel wurde zerkleinert und gesiebt, und die Fraktion 0,5 bis 1 mm war für die nachfolgend beschriebene Imprägnierung bereit.

Aktiver Teil

15 g feingemahlenes $V_2O_5$ wurden 2 Std. unter Rückfluss in Isobutanol bei starkem Rühren gekocht (104-105 °C. Das Reaktionsgemisch wurde filtriert und das i-Butanol abdestilliert. Dann wurde unter Vakuum weiter destilliert, wobei das Vanadium-i-butoxid bei ca. 110 °C überging.

Imprägnation

Die Träger nach a) und b) wurden jeweils unter trockenem Stickstoff in einen 100 ml Rundkolben mit seitlichem Hals und Hahn überführt. Sie wurden mit 10 ml trockenem n-Heptan durchnässt und dazu wurde das Vanadium-i-butoxid gegeben. Der Kolben wurde für 24 Std. verschlossen, dann die überstehende Lösung abgegossen und der Rückstand so lange mit n-Heptan gewaschen, bis in der Waschlösung keine Vanadiumverbindungen mehr nachweisbar waren. Alle Operationen wurden im trockenen $N_2$-Strom durchgeführt. Schliesslich wurde bei 300°C während 3 Std. im trockenen Luftstrom kalziniert.

Der Imprägnier- und Kalzinierschritt wurde an 6 Trägern der Art a) zwischen 0 und 5 mal und an einem Träger der Art b) einmal ausgeführt.

Aktivitätstests

Die erfindungsgemäss erhaltenen Katalysatoren wurden bei folgenden Versuchsbedingungen geprüft:

Katalysatormenge          1 g

Gasdurchsatz              124,7 $ml_n$/min

Eingangskonzentration

   Sauerstoff            1,83%

   Stickstoffmonoxid     900 ppm

   Ammoniak             900 ppm

   Schwefeldioxid       0 oder 390 ppm

Die Vergiftungstests wurden bei 350°C während 16 Std. durchgeführt und die angegebenen Katalysatoren zeigten keinen Aktivitätsverlust.

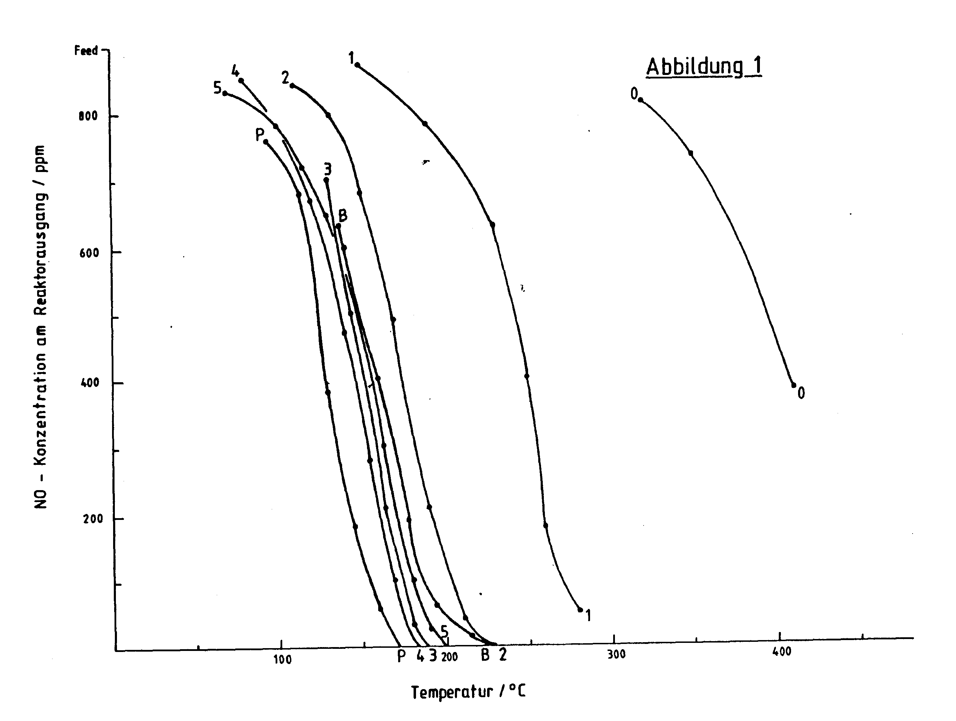

Die Messwerte sind in der Abbildung 1 festgehalten, wobei die

Kurve 0   $TiO_2$-Träger nach a), nicht imprägniert

      1        "              "    1 mal        "

      2        "              "    2 mal        "

      3        "              "    3 mal        "

      4        "              "    4 mal        "

      5        "              "    5 mal        "

      B   Träger nach b), gemischtes Gel 50 Mol.% $TiO_2$/$SiO_2$
          mit einmaliger Imprägnierung

      P   Vergleichsbeispiel, Katalysator hergestellt nach
          DE-AS 24 58 888, Spalte 39/40, Beispiel IV-1

die NO-Konzentration am Reaktorausgang in ppm in Bezug auf die Reaktionstemperatur in °C darstellt.

Beispiel 2

Cr$_2$O$_3$-Träger

250 g Chromnitrat (Cr(NO$_3$)$_3$. 9 H$_2$O) wurden in 2,3 l destilliertem Wasser aufgelöst. 15%ige NH$_3$-Lösung wurde während 3 Std. langsam unter Rühren zugetropft, bis der pH ca. 10 betrug. Die entstandene hellgrüne Fällung wurde während 2 Std. weitergerührt. Dann liess man den Niederschlag mindestens so lange absetzen, bis er noch etwa das halbe Volumen der Flüssigkeit einnahm, worauf man die überstehende Lösung dekantierte. Dann wurde wieder bis zum Rand aufgefüllt und das Dekantieren bis zum Neutralpunkt wiederholt.

Der gewaschene Rückstand wurde mittels Vakuum trockengesaugt, dann 24 Std. bis 60°C und 48 Std. bei 120°C getrocknet. Durch sorgfältiges Zerkleinern wurde eine Siebfraktion von 0,5 bis 1,0 mm gewonnen. Diese wurde 1 Std. bei 600°C unter Luftdurchfluss und 5 Std. unter Stickstoff kalziniert.

Imprägnierung

Unter trockenem Stickstoff wurde der Träger (5 - 6 g) in einen 100 ml Rundkolben mit seitlichem Hals und Hahn überführt.

Er wurde mit 10 ml Heptan (mit höchstens 3 - 4 ppm H$_2$O) durchnässt und dazu wurden 0,4 ml Vanadiumalkoxid gegeben. Der Kolben wurde für 24 Std. verschlossen und dann die überstehende Lösung unter N$_2$-Durchfluss abgegossen. Den Rückstand wusch man so lange mit Heptan, bis in der Waschlösung keine Vanadiumverbindung mehr nachweisbar war (unter N$_2$-Strom). Der Katalysator war unter trockenem Luftstrom bei 300°C während 3 Std. zu kalzinieren.

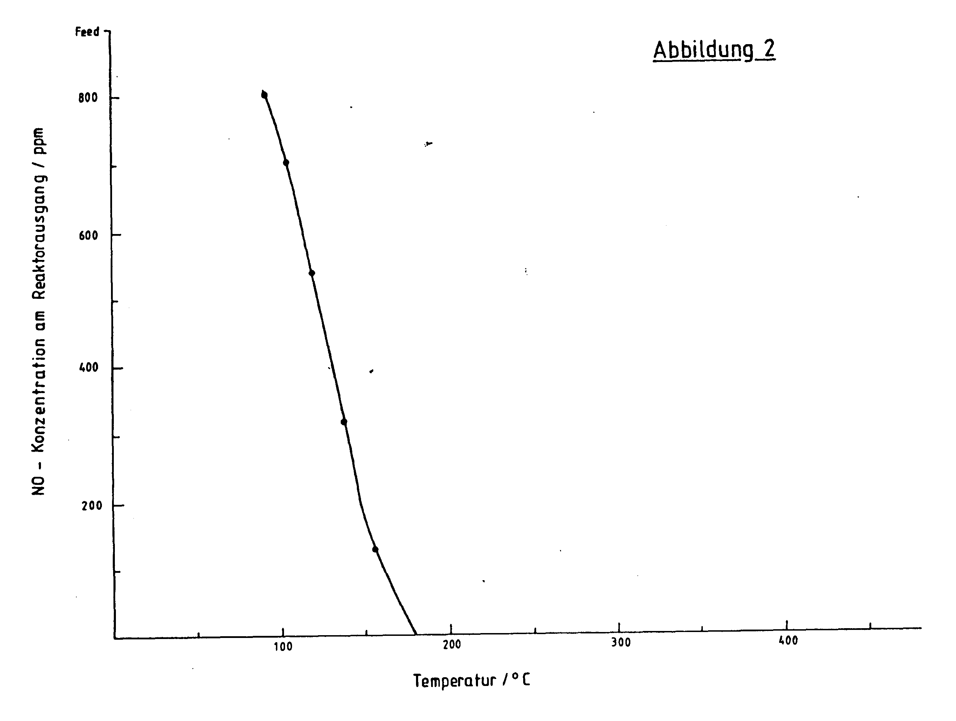

Die gemessenen Werte sind in Abbildung 2 aufgetragen, wobei die Kurve die NO-Konzentration am Reaktorausgang in ppm in Bezug auf die Reaktionstemperatur in °C darstellt.

**Patentansprüche**

1. Katalysator zur reduktiven Umwandlung von Stickoxiden in Abgasen, dadurch gekennzeichnet, dass der Katalysator dadurch hergestellt wird, dass man einen Träger, enthaltend TiO$_2$, SiO$_2$, ZrO, Cr$_2$O$_3$ und/oder SnO$_2$, wenigstens einmal mit einem Vanadiumalkoxid, gelöst in einem apolaren, wasserfreien Lösungsmittel in inerter Atmosphäre, imprägniert und den imprägnierten Träger bei Temperaturen von 300 bis 600°C während 3 bis 6 Stunden im trockenen Gasstrom mit 15 bis 25 Vol.% Sauerstoff kalziniert, um eine oberflächliche Abscheidung der aktiven Teile in Form der Vanadiumoxide auf dem Träger und eine anschliessende Aktivierung zu erreichen.

2. Katalysator nach Patentanspruch 1, dadurch gekennzeichnet, dass die Imprägnier- und Kalzinierschritte ein bis sechs mal, vorzugsweise drei bis fünf mal, hintereinander durchgeführt werden.

3. Katalysator nach Patentansprüchen 1 und 2, dadurch gekennzeichnet, dass als apolares, wasserfreies Lösungsmittel n-Hexan oder Petrolether angewendet wird.

4. Katalysator nach Patentansprüchen 1, 2 und 3 dadurch gekennzeichnet, dass der imprägnierte Träger in einem Gasstrom mit 21 Vol.% Sauerstoff, vorzugsweise im Luftstrom, behandelt wird.

5. Katalysator nach Patentansprüchen 1 und 2, dadurch gekennzeichnet, dass der Träger aus einem gemischten Gel, hergestellt aus 20 bis 60 Mol% Silika-Sol und 80 bis 40 Mol% Titandioxid-Sol, besteht.

6. Katalysator nach Patentansprüchen 1, 2, 3, 4 und 5, dadurch gekennzeichnet, dass der Träger mit Vanadium-i-butoxid imprägniert wird und das Vanadiumoxid nach der Aktivierung eine Wertigkeit von +5 aufweist und in Form von V$_2$O$_5$ vorliegt.

7. Verfahren zur reduktiven Umwandlung von Stickoxiden in Gasgemischen in Gegenwart von Ammoniak und Sauerstoff, dadurch gekennzeichnet, dass das Gasgemisch bei 150 bis 300°C mit einer Raumgeschwindigkeit von 7'000 bis 50'000 h$^{-1}$ mit einem Katalysator gemäss einem oder mehreren der Ansprüche 1 bis 6 in Berührung gebracht wird.

**Claims**

1. Catalyst for the reduction of nitrogen oxides in exhaust gases, characterized in that the catalyst is prepared by impregnating in an inert atmosphere a carrier containing $TiO_2$, $SiO_2$, $ZrO$, $Cr_2O_3$ und/or $SnO_2$ at least once with a vanadium alkoxide, dissolved in an apolar anhydrous solvent, and calcinating the impregnated carrier at temperatures of 300 to 600°C for 3 to 6 hours in a stream of dry gas containing 15 to 25 vol.-% of oxygen to obtain on the carrier surface a deposition of the active parts in the form of vanadium oxides and to achieve a subsequent activation.

2. Catalyst according to patent claim 1, characterized in that the impregnation and calcination steps are carried out once to six times, preferably three to five times, in sequence.

3. Catalyst according to patent claims 1 to 2, characterized in that as apolar anhydrous solvent n-hexane or petroleum ether is used.

4. Catalyst according to patent claims 1, 2 and 3, characterized in that the impregnated carrier is treated in a gas stream having 21 vol.-% of oxygen, preferably in an air stream.

5. Catalyst according to patent claims 1 and 2, characterized in that the carrier consists of a mixed gel, prepared from 20 to 60 mole-% of silica sol and 80 to 40 mole-% of titanium dioxide sol.

6. Catalyst according to patent claims 1, 2, 3, 4, and 5, characterized in that the carrier is impregnated with vanadium-i-butoxide and that after the activation the vanadium oxide has a valency of +5 and is present in the form of $V_2O_5$.

7. Process for the reduction of nitrogen oxides in exhaust gases in the presence of ammonia and oxygen, characterized in that the gas mixture is contacted at 150 to 300°C and a space velocity of 7 000 to 50 000 $h^{-1}$ with a catalyst according to one or more of claims 1 to 6.

**Revendications**

1. Catalyseur pour la réduction d'oxydes d'azote dans les gaz d'échappement, caractérisé en ce que le catalyseur est produit en imprégnant un porteur contenant $TiO_2$, $SiO_2$, $ZrO$, $Cr_2O_3$ et/ou $SnO_2$, au moins une fois avec un alcoxyde de vanadium, dissous dans un solvant anhydre apolaire sous atmosphère inerte et le support imprégné est calciné à des températures de 300 jusqu'à 600°C pendant 3 à 6 heures dans un courant gazeux sec avec 15 jusqu'à 25 % en volume d'oxygène pour obtenir une séparation superficielle des particules actives sous forme d'oxydes de vanadium sur le support et une activation consécutive.

2. Catalyseur selon la revendication 1, caractérisé en ce que les étapes d'imprégnation et de calcination sont conduites une à six fois, de préférence trois à cinq fois en succession.

3. Catalyseur selon les revendications 1 et 2, caractérisé en ce qu'en tant que solvant anhydre apolaire on utilise le n-hexane ou l'éther de pétrole ou ligroïne.

4. Catalyseur selon les revendications 1, 2 et 3, caractérisé en ce que le support imprégné est traité dans un courant gazeux avec 21 % en volume d'oxygène, de préférence dans un courant d'air.

5. Catalyseur selon les revendications 1 et 2, caractérisé en ce que le support est constitué par un gel mélangé, produit à partir de 20 jusqu'à 60 % molaire de sol de silice et de 80 jusqu'à 40 % molaire de sol de dioxyde de titane.

6. Catalyseur selon les revendications 1, 2, 3, 4 et 5, caractérisé en ce que le support est imprégné de vanadium-i-butoxyde et l'oxyde de vanadium après l'activation possède une valence de +5 et se présente sous forme de $V_2O_5$.

7. Procédé pour la réduction d'oxydes d'azote dans des mélanges gazeux en présence d'ammoniac et d'oxygène, caractérisé en ce que le mélange gazeux est mis en contact à 150 jusqu'à 300°C à une vitesse spatiale de 7 000 jusqu'à 50 000 $h^{-1}$ avec un catalyseur selon une ou plusieurs des revendications 1 à 6.

Abbildung 1

EP 0 256 209 B1